# EUROPÄISCHE PATENTSCHRIFT

(11) **EP 3 658 756 B1**
(45) Veröffentlichungstag und Bekanntmachung des Hinweises auf die Patenterteilung: **22.01.2025**
(21) Anmeldenummer: 18753323.7
(22) Anmeldetag: 24.07.2018
(51) Int. Cl.: F01N 13/18, F16B 39/26, F01N 13/16, F01N 13/10

(54) **BEFESTIGUNGSMUTTER SOWIE VERBRENNUNGSMOTOR MIT BEFESTIGUNGSMUTTER**
SECURING NUT AND COMBUSTION ENGINE HAVING A SECURING NUT
ÉCROU DE FIXATION AINSI QUE MOTEUR À COMBUSTION INTERNE MUNI D'UN ÉCROU DE FIXATION

(30) Priorität: 26.07.2017 DE 102017116933
(43) Veröffentlichungstag der Anmeldung: 03.06.2020
(73) Patentinhaber: Flaig, Hartmut, 78554 Aldingen (DE); Bayerische Motoren Werke Aktiengesellschaft, 80788 München (DE)
(72) Erfinder: FLAIG, Hartmut, 78554 Aldingen (DE); PRANTL, Stephan, 80796 München (DE); KUECHLER, Pierre, 81545 München (DE); OHMENHAEUSER, Friedrich, 80997 München (DE); STEINBRECHER, Martin, 82194 Gröbenzell (DE); MÜLLER, Jürgen, 78606 Seitingen-Oberflacht (DE); BÜHLER, Thomas, 78549 Spaichingen (DE)
(74) Vertreter: Patent- und Rechtsanwälte Behrmann Wagner PartG mbB
(86) Internationale Anmeldenummer: PCT/EP2018/069966
(87) Internationale Veröffentlichungsnummer: WO 2019/020589

(56) Entgegenhaltungen:
- DE-A1- 19 532 709
- DE-A1- 19 650 453
- DE-A1- 19 956 287
- DE-U1- 20 301 402
- GB-A- 341 333

## Beschreibung

Die Erfindung betrifft eine Befestigungsanordnung gemäß dem Anspruch 1 zum Festlegen eines Abgaskrümmers an einem Zylinderkopf eines Verbrennungsmotors durch Verschrauben in einer axialen Fixierrichtung (durch Verdrehen der Befestigungsmutter in einer Umfangsrichtung) mit einem an dem Zylinderkopf gehaltenen und eine Durchgangsöffnung im Abgaskrümmer durchsetzenden Außengewindebolzen (Stehbolzen), wobei die Befestigungsmutter einen Innengewindeabschnitt zum Verschrauben mit dem Außengewindebolzen sowie vorzugsweise Bremsmomentmittel zum Erhöhen des Lösemomentes umfasst, weiter umfassend eine Abstützfläche zum bevorzugt mittelbaren oder alternativ unmittelbaren axialen Abstützen am Abgaskrümmer, wobei die Abstützfläche an einem radial vorstehenden, in axialer Richtung elastisch vorspannbaren Federabschnitt der Befestigungsmutter ausgebildet ist.

Bei bekannten Verbrennungsmotoren ist der Abgaskrümmer mithilfe von mehreren Gewindebolzen-/Befestigungsmutter-Kombinationen am Zylinderkopf fixiert, wobei die Gewindebolzen jeweils eine Durchgangsöffnung im Abgaskrümmer durchsetzen und die mit den Gewindebolzen verschraubten Muttern den Abgaskrümmer zwischen einer unteren Stirnseite der Mutter und dem Zylinderkopf verklemmen. In der Praxis besteht das Problem, dass der Abgaskrümmer aufgrund der im Betrieb auftretenden Temperaturschwankungen, insbesondere bei der Startphase eines Verbrennungsmotors zum Schieben neigt, d.h. der Abgaskrümmer bewegt sich parallel zur Zylinderkopfoberfläche, wobei über das Krümmerblech und/oder über die sich ausschließlich auf dem Abgaskrümmer abstützenden Muttern ein Biegemoment auf den Gewindebolzen ausgeübt wird. Auch ist es möglich, dass sich die Muttern aufgrund der Vielzahl von Lastwechseln von den Gewindebolzen teilweise lösen, wodurch die Schraubenkraft unter einen vorgegebenen Minimalwert von beispielsweise 3kN sinkt. Hierdurch kann es zu Undichtigkeiten kommen, wodurch heißes Abgas in den Motorraum austreten und/oder Fremdluft in das Abgassystem angesaugt werden kann.

Aus der DE 199 20 822 A1 ist ein Verbrennungsmotor bekannt, bei welchem der Krümmer am Zylinderkopf mittels einer Mutter fixiert ist, die sich axial auf einer Distanzbuchse abstützt, die eine Durchgangsöffnung im Abgaskrümmer durchsetzt und sich axial unmittelbar am Abgaskrümmer abstützt. Gemäß eines ersten Ausführungsbeispiels der Druckschrift kann die Distanzhülse auch einstückig mit der Mutter ausgebildet sein, wobei sich in diesem Fall die Mutter über den Distanzhülsenabschnitt unmittelbar am Zylinderkopf abstützt. Gleichzeitig liegt die Mutter mit einem starren Flansch fest auf der Außenseite des Abgaskrümmers auf, wobei es auch bei der bekannten Anordnung aufgrund des im Betrieb auftretenden Biegemoments zu einer plastischen Verformung des Gewindebolzens und zu einem Abreißen der Mutter kommen kann, ebenso ist die Gefahr eines Lösens der Mutter mit daraus resultierendem Schraubkraftverlust und der Gefahr von Undichtigkeiten gegeben.

Zum weiteren Stand der Technik werden die JP 2004-339947 A, die DE 198 23 475 A1, die DE 100 49 117 A1, die DE 82 19 329 A, die DE 41 26 744 A1, die DE 198 07 312 A1, die DE 199 60 619 A1, die FR 2 902 457 A3 sowie die JP 8-246868 A genannt.

Vorstehende Problematik wird mit einer gegenüber den bis dato bekannten Befestigungsmuttern verbesserte, in der EP 2 729 680 B1 beschriebene Befestigungsmutter entschärft. Die dort beschriebene Befestigungsmutter ist einteilig ausgebildet und umfasst neben Bremsmomentmitteln zum Erhöhen des Lösemomentes eine an einem Abstützabschnitt eines Mutterkörpers ausgebildete erste Abstützfläche in Form einer axialen Stirnseite zum Abstützen auf dem Zylinderkopf sowie einen axial elastisch vorspannbaren Federabschnitt, an welchem eine (zweite) Abstützfläche ausgebildet ist, mit der sich der vorgenannte Federabschnitt unmittelbar auf dem Abgaskrümmer (Abgaskrümmerblech) abstützt. Durch das Vorsehen des Federabschnitts wird dem Abgaskrümmer ermöglicht, sich relativ zu der zweiten Abstützfläche zu verschieben, wodurch nicht die gesamte Verschiebekraft von der Mutter aufgenommen werden muss. Dies führt dann zu einer geringeren Belastung des Außengewindebolzens, so dass dessen Verformung oder sogar ein Abreißen sicher verhindert wird. Die bekannte Befestigungsmutter lässt sich im Kaltfließpressverfahren aufgrund der komplexen Formgebung jedoch nur schwierig fertigen. Darüber hinaus ist die Federkraft des Federabschnitts nicht skalierbar. Auch stützt sich die bekannte Befestigungsmutter zwingend mit ihrem Abstützabschnitt am Zylinderkopf ab, wozu entsprechend große Durchgangsöffnungen im Abgaskrümmer und eine entsprechende Anlagefläche am Zylinderkopf vorgesehen werden müssen.

Aus der WO 89/09344 ist eine Sicherungsschraube bekannt, welche Federmittel umfasst, die mit einem Befestigungsgegenstand auf Block gefahren werden und damit das Lösemoment der Sicherungsschraube erhöhen. Eine federnde oder elastische Abstützung des Befestigungsgegenstandes mittels der Federmittel ist nicht vorgesehen oder realisierbar, da sonst die Sicherungswirkung der Sicherungsschraube nicht erreicht werden kann.. Eine entsprechende Lehre ist auch aus der DE 203 01 402 U1 bekannt.

Auch die DE 10 2009 023 721 A1 lehrt eine Sicherungsmutter, bei der Federmittel oder Federelemente zur Erreichung einer Sicherungswirkung vorgesehen sind. Damit bilden die Federelemente Bremsmomentmittel im Sinne der vorliegenden Offenbarung. Eine federnde oder elastische Festlegung eines Abgaskrümmers bei gleichzeitiger Sicherung der Befestigungsmutter, insbesondere durch entsprechende Bremsmomentmittel, werden nicht offenbart, weshalb eine gesicherte und gleichzeitig federnde Festlegung des Abgaskrümmers mit einer Sicherungsmutter gemäß dieser Offenbarung nicht erreicht werden kann.

Aus der DE 298 17 010 U1 ist zudem ein Verschraubungsteil bekannt, bei dem ein Federelement relativ zu einer Stirnseite eines Schaftabschnitts einer Mutter rückversetzt ist. Das Verschraubungsteil ist zur Festlegung von Materialien vorgesehen, welche keinen hohen Preßkräfte standhalten können. Damit eignet sich das Verschraubungsteil nicht als Befestigungsmutter zum Festlegen eines Abgaskrümmers an einem Zylinderkopf.

Gegenstand der DE 195 32 709 A1 ist eine durch Massiv-Umformen hergestellte Schraubmutter mit einem unverlierbar befestigten Druckteller, umfassend einen absichtlichen Gewindefehler als Bremsmomentmittel.

Ferner ist aus der DE 199 56 287 A1 eine Mutter mit Druckring beschrieben. Aus der DE 196 50 453 A1 ist ein Verfahren zur Herstellung einer Zusammenbau-Mutter sowie eine nach dem Verfahren hergestellte Zusammenbau-Mutter bekannt. Weiterhin ist aus der GB 341 333 A eine Befestigungsmutter mit elastischen Unterlegscheiben bekannt, welche ein Überdrehen verhindern.

Ausgehend von dem vorgenannten Stand der Technik liegt der Erfindung daher die Aufgabe zugrunde, eine verbesserte, einfach festlegbare Befestigungsanordnung zum Festlegen eines Abgaskrümmers an einem Zylinderkopf eines Verbrennungsmotors anzugeben, die aufgrund ihrer Beschaffenheit zudem die Möglichkeit eröffnet, durch einfache Maßnahmen die Federkraft des Federabschnitts einer Befestigungsmutter zu skalieren. Darüber hinaus soll die Befestigungsanordnung den Erhalt einer Mindestschraub- bzw. Klemmkraft auf den Abgaskrümmer zur Gewährleistung der Dichtheit auch nach einer Vielzahl von durch Wärme-/Kältewechsel bedingten Lastwechseln sicherzustellen, und zwar ohne die Notwendigkeit die für die in der EP 2 729 680 B1 beschriebene Lösung unverzichtbaren großflächigen Öffnungen im Abgaskrümmer vorsehen zu müssen. Ferner besteht die Aufgabe darin, einen Verbrennungsmotor mit entsprechend verbesserter Befestigungsanordnung anzugeben.

Diese Aufgabe wird gelöst durch eine Befestigungsanordnung umfassend zumindest eine Befestigungsmutter, einen Abgaskrümmer, welcher einen Außengewindebolzen umfasst, und einen Zylinderkopf eines Verbrennungsmotors, wobei die Befestigungsmutter zum Festlegen des Abgaskrümmers an dem Zylinderkopf durch Verschrauben in einer axialen Fixierrichtung mit einem dem an dem Zylinderkopf gehaltenen und eine Durchgangsöffnung im Abgaskrümmer durchsetzenden Außengewindebolzen ausgebildet ist, wobei die Befestigungsmutter einen Innengewindeabschnitt zum Verschrauben mit dem Außengewindebolzen sowie Bremsmomentmittel zum Erhöhen des Lösemomentes umfasst, weiter umfassend eine Abstützfläche zum mittelbaren oder unmittelbaren axialen Abstützen am Abgaskrümmer, wobei die Abstützfläche an einem radial vorstehenden, in axialer Richtung elastisch vorspannbaren Federabschnitt ausgebildet ist, wobei die Befestigungsmutter mehrteilig ausgebildet ist und einen sich axial von einem hinteren Ende bis einer in der Fixierrichtung vorderen, axialen Stirnseite erstreckenden Mutterkörper mit einem die axiale Stirnseite aufweisenden Schaftabschnitt sowie mindestens ein von dem Mutterkörper separates, über Sicherungsmittel unverlierbar an dem Mutterkörper festgelegtes, insbesondere als Spannscheibe ausgebildetes, erstes Federteil umfasst, und dass an dem Mutterkörper der Innengewindeabschnitt ausgebildet ist und dass das erste Federteil den Federabschnitt mit der Abstützfläche ausbildet, die ein in der axialen Fixierrichtung vorderstes axiales Ende der Befestigungsmutter bildet, relativ zu dem die Stirnseite des Schaftabschnittes bezogen auf die axiale Fixierrichtung rückversetzt und axial beabstandet ist.

Dabei ist erfindungsgemäß vorgesehen, dass die Befestigungsmutter über den zumindest einen Außengewindebolzen den Abgaskrümmer am Zylinderkopf mit einer vorgegebenen Schraubkraft oder Vorspannkraft unmittelbar oder mittelbar sichert, wobei das mindestens eine Federteil der Befestigungsmutter so ausgebildet, insbesondere so dimensioniert, ist, dass in einem gesicherten Zustand der Befestigungsanordnung eine federnde und/oder elastische mittelbare oder unmittelbare Anlage der Abstützfläche des Federteils an dem Abgaskrümmer erreicht wird, wobei die Bremsmomentmittel der Befestigungsmutter zum Erhöhen des Lösemomentes der Befestigungsanordnung dienen und, dass die Befestigungsmutter im montierten Zustand mir ihrer Abstützfläche nicht auf Block mit dem Abgaskrümmer oder Gleitblech angezogen ist.

Hinsichtlich des Verbrennungsmotors wird die Aufgabe mit den Merkmalen des Anspruchs 11 gelöst, also durch einen Verbrennungsmotor mit einem Zylinderkopf, an dem ein Abgaskrümmer mithilfe mindestens einer nach dem Konzept der Erfindung ausgebildeten Befestigungsanordnung festgelegt ist, wobei die Befestigungsmutter mit einem am Zylinderkopf gehaltenen und eine Durchgangsöffnung im Abgaskrümmer durchsetzenden Außengewindebolzen mit ihrem Innengewindeabschnitt, insbesondere unter Wechselwirkung von Bremsmomentmitteln mit dem Außengewindebolzen (Stehbolzen), aufgeschraubt ist und den Abgaskrümmer in Richtung Zylinderkopf mittels des mindestens einen Federteils kraftbeaufschlagt, welches elastisch von dem Abgaskrümmer weg (d.h. entgegen der axialen Fixierrichtung) ausgelenkt (vorgespannt) ist und sich in axialer Richtung mit seiner Abstützfläche, bevorzugt mittelbar, insbesondere über ein zwischen Abstützfläche und Abgaskrümmer (Abgaskrümmerblech) angeordnetes Gleitblech (Schiebeblech); auf dem Abgaskrümmer abstützt. Bei dem erfindungsgemäßen Verbrennungsmotor ragt die erfindungsgemäße Befestigungsmutter nicht in eine Abgaskrümmeröffnung (Durchgangsöffnung) hinein oder durchsetzt diese, sondern befindet sich vollständig in der Fixierrichtung oberhalb bzw. außerhalb des Abgaskrümmers und ggf., falls vorgesehen, einem zwischen Abgaskrümmer und Befestigungsmutter vorgesehenen Gleitblech. Daher können die Durchgangsöffnungen im Abgaskrümmer für die Außengewindebolzen eine geringe Querschnittsfläche aufweisen als im Stand der Technik.

Vorteilhafte Weiterbildungen der Erfindung sind in den Unteransprüchen angeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, im Gegensatz zum Stand der Technik den Federabschnitt nicht einteilig mit dem den Innengewindeabschnitt ausbildenden Mutterabschnitt bzw. Mutterkörper zu gestalten, sondern als Federabschnitt mindestens ein separates Bauteil (Federteil), insbesondere in Form einer Tellerfeder (Spannscheibe) vorzusehen und dieses an einem den Innengewindeabschnitt ausbildenden Mutterkörper, an dem bevorzugt auch die fakultativen Befestigungsmittel, ganz besonders bevorzugt monolithisch (einteilig mit dem Mutterkörper) vorgesehen sind, unverlierbar zu halten bzw. festzulegen. Ganz besonders bevorzugt ist das mindestens eine Federteil dabei radial benachbart zu einem Schaftabschnitt des Mutterkörpers angeordnet bzw. wird, insbesondere bevorzugt zentrisch von diesem durchsetzt. Die lösbare Anordnung des mindestens einen Federteils eröffnet die Möglichkeit einer separaten Fertigung des Federabschnitts und des Mutterkörpers, insbesondere durch Kaltumformen (bevorzugt wird der Mutterkörper durch Kaltfließpressen und/oder das mindestens eine Federteil durch Stanzformen hergestellt), ohne dass hierbei Nachteile bei der Montage des Abgaskrümmers, insbesondere des Abgaskrümmerblechs am Zylinderkopf resultieren würden, da das Federteil bereits unverlierbar am Mutterkörper über entsprechende, bevorzugt zum formschlüssigen Fixieren des Federteils am Mutterkörper ausgebildete Sicherungsmittel festgelegt ist. Darüber hinaus ist die Federkraft des Federabschnitts der Befestigungsmutter auf einfache Weise skalierbar, indem mit einem Mutterkörper bzw. mit gleichen Mutterkörpern unterschiedlich dimensionierte, insbesondere voneinander unterschiedliche Federkonstanten aufweisende Federteile verwendet werden können. Auch ist es möglich, zusätzlich zu dem die Abstützfläche ausbildenden (in der Fixierrichtung vorderen) Federteil, insbesondere auf der von der Abstützfläche abgewandten Seite dieses Federteils mindestens ein weiteres (axial elastisch verspannbares bzw. deformierbares) Federteil am Mutterkörper unverlierbar anzuordnen und hierdurch die Federsteifigkeit zu erhöhen. Die Federteile können dabei gleich gestaltet sein oder eine voneinander unterschiedliche Federkonstante aufweisen.

Die Federteile, insbesondere die Federkonstanten der Federteile, sind dabei erfindungsgemäß so skaliert, dass im monierten Zustand der Befestigungsmutter zumindest im einem kalten Zustand des Abgaskrümmers eine elastische Restverformbarkeit der Federteile bestehen bleibt. Das bedeutet im Umkehrschluss, dass die Federteile so dimensioniert und/oder skaliert sind, dass die Federteile im montierten Zustand mit ihrer Abstützfläche nicht auf Block mit dem Abgaskrümmer oder Gleitblech gefahren werden. Die Federteile sind also so dimensioniert, dass bei einem Erreichen einer vordefinierten Schraubenkraft oder Vorspannkraft bei der Verbindung, insbesondere mit einem Außengewindebolzen, eine federnde Abstützung der Federteile und/oder der Befestigungsmutter auf einem Untergrund, insbesondere einem Abgaskrümmer oder Gleitblech, erreicht wird.

Dementsprechend dient die vorliegende Befestigungsanordnung, insbesondere mittels der Federteile der Befestigungsmutter zum federnden und/oder elastischen Festlegen und, insbesondere mittels der Bremsmomentmittel, zum Sichern eines Abgaskrümmers an einem Zylinderkopf eines Verbrennungsmotors. Damit kommt dem Federteil, insbesondere im montierten Zustand, der Befestigungsmutter eine Federwirkung zu.

Demnach führt die Erfindung auf eine Befestigungsanordnung umfassend zumindest eine erfindungsgemäße Befestigungsmutter welche, über zumindest einen Außengewindebolzen einen Abgaskrümmer an einem Zylinderkopf mit einer vorgegebenen Schraubkraft oder Vorspannkraft unmittelbar oder mittelbar sichert, wobei die Federteile der Befestigungsmutter so ausgebildet, insbesondere so dimensioniert, sind, dass in einem gesicherten Zustand der Befestigungsanordnung eine federnde und/oder elastische mittelbare oder unmittelbare Anlage der Abstützfläche der Federteile an dem Befestigungsgegenstand erreicht wird, wobei die Bremsmomentmittel der Befestigungsmutter eine Erhöhung des Lösemomentes der Befestigungsanordnung bewirken. Das Federteil ermöglicht in der Befestigungsanordnung eine flexible Abstützung der Befestigungsmutter.

Das mindestens eine Federteil ist bevorzugt, wie erwähnt, als Tellerfeder ausgebildet und weist eine, weiter bevorzugt zentrische Durchgangsöffnung auf, die von dem Mutterköper, insbesondere von dessen Schaftabschnitt axial durchsetzt ist. Neben den vorerwähnten Vorteilen einer vereinfachten Fertigbarkeit und einer einfachen Skalierbarkeit der Federkraft bzw. -steifigkeit wird auch bei der erfindungsgemäßen Befestigungsmutter gewährleistet, dass der Abgaskrümmer, insbesondere ein Abgaskrümmerblech, auf dem sich die Befestigungsmutter mit dem Federteil, insbesondere über ein zwischen Befestigungsmutter und Abgaskrümmer angeordnetes Gleitblech mit der Abstützfläche des Federteils abstützt, schieben kann, d.h. sich relativ zu der Befestigungsmutter bzw. deren Federteil bewegen kann, sodass die Gefahr eines Abreißens reduziert wird. Das mindestens eine Federteil gewährleistet darüber hinaus durch mittelbares oder unmittelbares Abstützen am Abgaskrümmer auch durch eine Vielzahl von Wärme-/Kältewechsel bedingten Lastwechseln die Aufrechterhaltung einer Mindestvorspann- bzw. Schraubkraft, sodass Undichtigkeiten in einem Bereich zwischen Abgaskrümmer und Zylinderkopf und damit ein Abblasen von heißen Abgasen in den Motorraum und/oder ein Ansaugen von Fremdluft in den Abgasstrang sicher vermieden werden. Das, insbesondere als Tellerfeder ausgebildete, mindestens eine Federteil übernimmt dabei in erster Linie die Aufgabe der Federkraftbeaufschlagung des Abgaskrümmers, insbesondere über das vorerwähnte Gleitblech. Durch diese axiale Vorspannung bleibt eine Mindestspannkraft auf den Abgaskrümmer erhalten. Auch übernimmt das Federelement die Funktion einer Gleitscheibe (Unterlegscheibe), die trotz der auf die elastische Vorspannung (Auslenkung) zurückzuführenden Federkraftbeaufschlagung auf den Abgaskrümmer ein Verschieben des Abgaskrümmers bei Temperaturschwankungen, entweder unmittelbar relativ zu dem Federteil und/oder zu dem vorerwähnten Gleitblech ermöglicht.

Die erfindungsgemäße Befestigungsmutter bzw. deren Mutterkörper ist ohne Abstützabschnitt zum Abstützen am Zylinderkopf ausgebildet - im Gegenteil ist die Stirnseite des Mutterkörpers bezogen auf die Abstützfläche in der Fixierrichtung zurückversetzt, sodass ein axiales, in der Fixierrichtung vorderstes Mutterende von der Abstützfläche des (vorderen) Federteils gebildet ist. Bevorzugt beträgt der Axialabstand zwischen der in der Fixierrichtung vorderen, bezogen auf die Abstützfläche rückversetzten Stirnfläche und der Abstützfläche mindestens 0,1mm und ist ganz besonders bevorzugt aus einem Wertebereich zwischen 0,1mm und 5mm, ganz besonders bevorzugt zwischen 0,1mm und 3mm, noch weiter bevorzugt zwischen 0,2mm und 1,5mm, ganz besonders bevorzugt zwischen 0,2mm und 0,5mm gewählt.

Erfindungsgemäß ist eine Ausführungsform, bei der im festgezogenen Zustand der Befestigungsmutter ein geringfügiger Abstand zwischen der Stirnfläche des Mutterkörpers und dem Bauteil des Verbrennungsmotors, an dem sich das Federteil mit seiner Abstützfläche abstützt verbleibt. Bevorzugt ist der Axialabstand der in der Fixierrichtung, bezogen auf die Abstützfläche rückversetzten Stirnseite des Mutterkörpers zur Abstützfläche des ersten Federteils größer als ein maximaler Federweg des mindestens einen Federteils, insbesondere der mehreren Federteile.

Im Hinblick auf die konkrete Ausgestaltung der Sicherungsmittel gibt es unterschiedliche Möglichkeiten. Grundsätzlich ist es möglich, diese als von dem Federteil und/oder dem Mutterkörper separates Bauteil auszugestalten. Ganz besonders bevorzugt ist jedoch eine Ausführungsvariante, bei der die Sicherungsmittel monolithisch, d.h. einteilig mit dem Mutterkörper ausgestaltet sind, insbesondere in Form mindestens eines radialen Vorsprungs, ganz besonders bevorzugt in Form von zwei in axialer Richtung beabstandeten radialen Vorsprüngen (Widerlagern), zwischen denen das mindestens eine Federteil zumindest abschnittsweise aufgenommen ist, um das Federteil somit an dem Mutterkörper in axialer Richtung zu sichern.

Wie erwähnt, umfasst die nach dem Konzept der Erfindung ausgebildete Befestigungsmutter Bremsmomentmittel, die monolithisch am Mutterkörper realisiert sind. Erfindungsgemäß verhindern diese ein selbsttätiges Lösen der Mutter, insbesondere indem sie dafür Sorge tragen, dass die Reibung zwischen Mutter und dem Gewindebolzen erhöht wird. Anders ausgedrückt wird das Lösemoment erhöht, welches auf die Mutter aufgebracht werden muss, damit die Mutter entgegen der Fixierrichtung durch Verdrehen in Umfangsrichtung axial verstellt wird. Die Bremsmomentmittel können, wie später noch erläutert werden wird, bevorzugt ausgestaltet sein, wie in der WO 2007/076968 A1 oder der EP 2 729 680 B1 offenbart. Die Bremsmomentmittel tragen dafür Sorge, dass sich die Mutter trotz eines möglichen Schiebens des Abgaskrümmers nicht löst. Zusätzlich zu Bremsmomentmitteln an der Befestigungsmutter können Bremsmomentmittel am Außengewindebolzen des Verbrennungsmotors vorgesehen werden. Anstelle der vorbeschriebenen Ausführungsform von Bremsmomentmitteln können andere Ausführungsformen, beispielsweise deformierte Gewindegänge und/oder -flanken, etc. realisiert werden. Demnach wird deutlich, dass die Federteile zur federnden Festlegung, insbesondere des Abgaskrümmers, dienen, wohingegen die Bremsmomentmittel eine Sicherung der Befestigungsmutter bewirken.

Wie bereits erläutert, ist die Federkraft der Befestigungsmutter, insbesondere bei Einsatz identischer Mutterkörper, auf einfache Weise skalierbar, indem zusätzlich zu dem die Abstützfläche aufweisenden Federteil, insbesondere axial benachbart zu dem Federteil, ganz besonders bevorzugt auf einer von der Abstützfläche abgewandten Axialseite des Federteils mindestens ein, bevorzugt ausschließlich ein, weiteres (von dem Mutterkörper ebenfalls separates) zweites Federteil an dem Mutterkörper über Sicherungsmittel unverlierbar festgelegt ist. Dabei sind die mehreren Federteile bevorzugt in Reihe angeordnet. Je mehr Federteile eingesetzt werden, desto größer ist die Nachgiebigkeit des Federpaketes und damit desto höher ist der Federweg. Für den Fall des Vorsehens eines zweiten Federteils stützt sich bevorzugt nicht das erste Federteil mit einer von der Abstützfläche abgewandten Axialseite an einem radial vorstehenden, hinteren Widerlagerabschnitt des Mutterkörpers ab, sondern das zweite Federteil, während sich das erste Federteil mittelbar oder unmittelbar am zweiten Federteil abstützt.

Für den Fall des Vorsehens von mindestens zwei, bevorzugt ausschließlich zwei, axial benachbarten Federteilen gibt es im Hinblick auf deren konkrete Ausbildung und Orientierung unterschiedliche Möglichkeiten. So ist es bevorzugt, beide Federteile jeweils als Tellerfeder, insbesondere mit jeweils, ganz besonders bevorzugt zentrischer, Durchgangsöffnung, auszubilden. Beide Federteile können dabei in die gleiche Richtung geneigt oder gewölbt ausgebildet sein, insbesondere in der Fixierrichtung. Auch ist es alternativ denkbar, die beiden Federteile in einander entgegengesetzte Richtungen zu neigen und/oder zu wölben, insbesondere voneinander weg, derart, dass die radial äußeren Randbereiche der Federteile in einander entgegengesetzte Axialrichtungen weisen, wobei sich in diesem Fall das zweite Federteil, bevorzugt, jedoch nicht zwingend, mit einem radial äußeren Randbereich am radial vorstehenden Widerlagerabschnitt des Mutterkörpers abstützt. Für den Fall der gleichen Orientierung bzw. Wölbung/Neigung der Federteile ist es bevorzugt, wenn sich das zweite Federteil mit einem radial inneren bzw. zentrischen Randbereich axial an den Widerlagerabschnitt des Mutterkörpers abstützt.

Besonders zweckmäßig ist es, wenn die Befestigungsmutter Antriebsmittel, beispielsweise in Form mindestens eines Schlüsselflächenpaares oder einer stirnseitigen Mehrkant- oder Mehrrundvertiefung, insbesondere in Form eines Imbusantriebs oder Torxantriebs aufweist. Bevorzugt sind solche Antriebsmittel monolithisch mit dem Mutterkörper ausgebildet.

Besonders zweckmäßig ist eine Ausführungsvariante der Befestigungsmutter, bei der sowohl der Mutterkörper als auch das davon separate Federteil als, insbesondere Kaltfließpressteile, aus Metall ausgebildet sind. Ganz besonders bevorzugt ist eine Ausführungsvariante der Befestigungsmutter, bei der diese zusätzlich zu dem Mutterkörper und dem mindestens einen Federteil keine zusätzlichen Bauteile umfasst.

Im Hinblick auf die konkrete Ausgestaltung der Sicherungsmittel gibt es unterschiedliche Möglichkeiten. Besonders zweckmäßig ist es, dass sich nicht das Federteil axial in der Fixierrichtung an einem vorderen, axialen (in radialer Richtung nach außen vorstehenden, bevorzugt zum formschlüssigen Sichern des Federteils am Mutterkörper ausgebildeten) Widerlagerabschnitt abstützt, der ganz besonders bevorzugt als Ringwulst am Mutterkörper ausgebildet ist und noch weiter monolithisch mit diesem realisiert ist. Ein solcher axialer vorderer Widerlagerabschnitt kann beispielsweise durch Verstemmen und ein dadurch resultierendes Umformen des Mutterkörpers realisiert werden, insbesondere nach Aufschieben des Federteils auf den dazu separaten Mutterkörper.

Dabei hat es sich als besonders zweckmäßig erwiesen, wenn an dem, insbesondere ringförmigen Federteil eine Aussparung, bevorzugt in Form einer Innenkonusfläche oder einer, bevorzugt konkav gerundete Fläche ausgebildet ist, die die Durchgangsöffnung im Federteil entgegen der Fixierrichtung in radialer Richtung verjüngt. Über eine solche abgeschrägte oder abgerundete Fläche kann sich das Federteil an dem vorderen axialen Widerlagerabschnitt abstützen.

Ganz besonders bevorzugt ist es, wenn sich das mindestens eine Federteil, insbesondere ein zweites Federteil mit seiner von der Abstützfläche abgewandten (Axial-)Seite axial an einem monolithisch am Mutterkörper ausgebildeten, hinteren, axialen Widerlagerabschnitt abstützt, der ganz besonders bevorzugt als Umfangsbund am Mutterkörper ausgebildet ist. Ganz besonders bevorzugt ist dieser hintere Widerlagerabschnitt, insbesondere Umfangsbund, so ausgebildet und angeordnet, dass er eine maximale Vorspannung des mindestens einen Federteils begrenzt, indem sich das Federteil mit zunehmender Vorspannung weiter bzw. zunehmend an dem axialen hinteren Widerlagerabschnitt anlegt. Ganz besonders bevorzugt ist eine Ausführungsform, bei der zusätzlich zu dem gerade erläuterten hinteren Widerlagerabschnitt der bereits im Vorfeld erwähnte vordere Widerlagerabschnitt, insbesondere in Form eines Ringwulstes vorgesehen ist, sodass das mindestens eine Federteil sandwichartig zwischen den Widerlagerabschnitten aufgenommen ist.

Im Hinblick auf die Anordnung des Innengewindeabschnitts gibt es unterschiedliche Möglichkeiten. So kann der Innengewindeabschnitt entgegen der Lehre der EP 2 729 680 B1 auch nur am Innenumfang des in einem axial vorderen Endbereich des Mutterkörpers vorgesehenen axialen Schaftabschnitts ausgebildet sein und sich dort bevorzugt bis zum axial vorderen Ende des Mutterkörpers benachbart zur Stirnfläche erstrecken. Bevorzugt ist der Innengewindeabschnitt auch oder ausschließlich in der axialen Verlängerung des Schaftabschnittes des Mutterkörpers nach hinten vorgesehen. Ganz besonders bevorzugt ist eine Ausführungsform der Befestigungsmutter, bei der der Innengewindeabschnitt, ggf. unterbrochen durch eine Innenumfangsnut zur Realisierung der Bremsmomentmittel, axial durchgängig am Innenumfang einer die Befestigungsmutter durchsetzenden Durchgangsöffnung ausgebildet ist. Bei einer alternativen Ausführungsform ist der Schaftabschnitt an seinem Innenumfang zumindest abschnittsweise innengewindefrei.

Wie erwähnt ist es besonders bevorzugt, wenn die Bremsmomentmittel unmittelbar am Mutterkörper ausgebildet sind, wobei es weiter bevorzugt ist, wenn die Bremsmomentmittel, vorzugsweise ausschließlich, aufgrund elastischer Verformung oder einer dadurch verursachten Reibungserhöhung das Löse- bzw. Haltemoment erhöhen. Beispielsweise kann dies erreicht werden, indem der Innengewindeabschnitt unterbrochen ist von einer Ringnut, sodass zwei axial beabstandete Innengewindebereiche resultieren, die elastisch relativ zueinander verstellbar sind und die Innengewinde der Innengewindebereiche axial und/oder in Umfangsrichtung versetzt angeordnet sind, um einen Steigungssprung zu realisieren, aus dem das Bremsmoment beim Verschrauben mit dem Außengewindebolzen resultiert. Ganz besonders bevorzugt wird die Bremsmomentwirkung, wie in der WO 2007/076968 A1 offenbart, erzielt. Zusätzlich zu Bremsmomentmitteln an der Mutter können, wie bereits erläutert, Bremsmomentmittel am Außengewindebolzen vorgesehen werden, beispielsweise durch eine Deformierung des Außengewindes des Außengewindebolzens. Als Alternative zu der in den vorgenannten Druckschriften beschriebenen Ausführung der Bremsmomentmittel kann beispielsweise auch eine Gewinde-Deformation, bevorzugt am Innengewinde der Bremsmomentmutter oder alternativ am Stehbolzen, beispielsweise in Form einer, bevorzugt axialen, Strich- bzw. Linienprägung vorgesehen werden.

Im Rahmen des erfindungsgemäßen, die nach dem Konzept der Erfindung ausgebildete Befestigungsanordnung umfassenden Verbrennungsmotors ist es bevorzugt, wenn der Mutterkörper mit seiner Stirnseite nicht in eine im Abgaskrümmer vorgesehene Durchgangsöffnung und/oder in eine auf einem fakultativen, auf dem Abgaskrümmer angeordneten Gleitblech vorgesehene Durchgangsöffnung hineinragt. Grundsätzlich ist es möglich, dass sich die Befestigungsmutter bei entsprechender Dimensionierung mit ihrer vorderen Stirnseite zusammen mit dem dann elastisch vorgespannten Federteil auf demselben Bauteil, insbesondere einem fakultativen Gleitblech oder alternativ unmittelbar auf dem Abgaskrümmer abstützt. Erfindungsgemäß ist es, wenn die Befestigungsmutter nicht auf Block angezogen ist, also derart, dass auch im angezogenen Zustand der Befestigungsmutter die Stirnseite bezogen auf die Fixierrichtung relativ zur Abstützfläche des Federteils rückversetzt angeordnet ist.

Weitere Vorteile, Merkmale und Einzelteile der Erfindung ergeben sich aus der nachfolgenden Beschreibung eines bevorzugten Ausführungsbeispiels sowie anhand der Zeichnungen.

Diese zeigen in:
- Fig. 1:: eine Längsschnittansicht durch eine nach dem Konzept der Erfindung ausgebildete Befestigungsmutter entlang der Schnittlinie A-A gemäß Fig. 2,
- Fig. 2:: eine Draufsicht auf die Befestigungsmutter gemäß Fig. 1 in einer axialen Fixierrichtung und
- Fig. 3:: ein vergrößertes Detail aus Fig. 1, wobei zur Verdeutlichung der Anordnung der Befestigungsschraube auf dem Verbrennungsmotor, letzterer ausschnittsweise unterhalb der Befestigungsmutter dargestellt ist.

In den Figuren sind gleiche Elemente und Elemente mit der gleichen Funktion mit den gleichen Bezugszeichen gekennzeichnet.

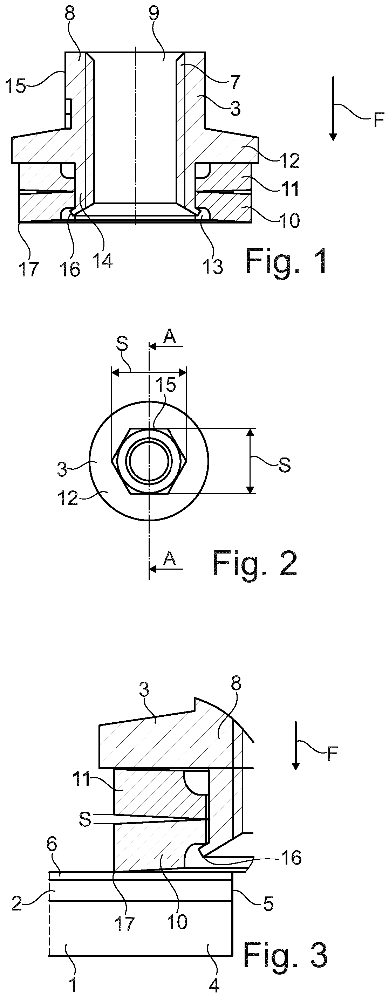

In Fig. 3 ist ausschnittsweise ein Verbrennungsmotor 1 dargestellt. Der Verbrennungsmotor 1 umfasst einen Abgaskrümmer 2, der mit einer hier ausschnittsweise gezeigten, nach dem Konzept der Erfindung ausgebildeten Befestigungsmutter 3 an einem Zylinderkopf 4 des Verbrennungsmotors 1 festgelegt und axial gegen den Zylinderkopf 4 kraftbeaufschlagt ist. Zu diesem Zweck ist die Mutter 3 mit einem ein Außengewinde aufweisenden, nicht dargestellten Außengewindebolzen (Stehbolzen) verschraubt, der im Zylinderkopf 4 verankert ist und der eine Durchgangsöffnung 5 im Abgaskrümmer 2 sowie einem darauf angeordneten Gleitblech 6 durchsetzt. Der Durchmesser dieser Durchgangsöffnung 5 ist gering bemessen und entspricht im Wesentlichen dem Durchmesser des Außengewindebolzens zuzüglich eines Spiels. Nicht gezeigt ist eine fakultative, bevorzugt zwischen Abgaskrümmer 2 und Zylinderkopf 4 angeordnete Flachdichtung.

Der Außengewindebolzen durchsetzt die vorgenannte Durchgangsöffnung 5 im Abgaskrümmer 2 und im Gleitblech 6 und überragt den Abgaskrümmer 2 entgegen einer axialen Fixierrichtung F der Befestigungsmutter 3. Die Befestigungsmutter 3 ist als Sicherungsmutter ausgebildet und umfasst in einem vom Zylinderkopf 4 abgewandten Bereich nicht gezeigte Bremsmomentmittel, die in dem gezeigten Ausführungsbeispiel beispielsweise wie in der WO 2007/076968 A1 oder auf andere Weise, beispielsweise durch eine Deformation eines Innengewindes 7 der Befestigungsmutter 3 und/oder am mit dem Innengewinde 7 korrespondierenden Außengewindebolzen realisiert sein können. Die Bremsmomentmittel sind jedenfalls so ausgebildet, dass sie das Lösemoment zum Lösen der Befestigungsmutter 3 im Vergleich zu einer Ausführung ohne Bremsmomentmittel erhöhen und damit die Befestigungsmutter 3 gegen Lösen, beispielsweise durch Vibration oder ein Verdrehen der Befestigungsmutter 3 durch ein Schieben des Abgaskrümmers 2 bei Erwärmung sichern.

Wie sich aus Fig. 3 ergibt, ist die Befestigungsmutter 3 mehrteilig ausgebildet und umfasst einen als Kaltfließpressteil ausgebildeten Mutterkörper 8 mit einer Innengewindeöffnung 9, an deren Innenumfang das Innengewinde 7, vorliegend axial durchgängig ausgebildet ist. An dem Mutterkörper 8 sind zwei jeweils als Spann- bzw. Tellerfeder ausgebildete Federteile 10, 11 unverlierbar festgelegt, wobei im Folgenden das mit dem Bezugszeichen 10 gekennzeichnete Federteil als vorderes, erstes Federteil 10 und das mit dem Bezugszeichen 11 gekennzeichnete Federteil als zweites Federteil bezeichnet wird. Die beiden Federteile 10, 11 stützen sich axial unmittelbar aneinander ab und sind sandwichartig aufgenommen zwischen einem radial vorstehenden, als Umfangsbund ausgebildeten hinteren Widerlager 12 und einem axial in der Fixierrichtung F davon beabstandeten radial verkürzten Umfangswulst, der ein vorderes Widerlager 13 bildet. Die Widerlager 12, 13 (Widerlagerabschnitte des Mutterkörpers) sind monolithisch mit dem Mutterkörper 8 ausgebildet und dienen als Sicherungsmittel zum unverlierbaren Halten der Federteile 10, 11. Zu erkennen ist, dass die Federteile 10, 11 ineinander entgegengesetzte Richtungen gewölbt sind, wobei das erste Federteil 10 in die Fixierrichtung F gewölbt ist. Die beiden Federteile 10, 11 liegen mit einem radial inneren Randbereich aneinander an, wobei sich der Axialabstand mit zunehmender Radialerstreckung der Federteile 10, 11 vergrößert und somit einen in Fig. 3 gekennzeichneten maximalen Federweg s begrenzt. Das zweite, in der Fixierrichtung F hintere Federteil 11 stützt sich vorliegend mit einem radial äußeren Randbereich axial am hinteren Widerlager 12 ab, während das erste Federteil 10 sich mit einem radial inneren Randbereich am vorderen Widerlager 13 abstützt.

Zu erkennen ist, dass sich die Federteile 10, 11 an einem Schaftabschnitt 14 des Mutterkörpers befinden, der axial beabstandet ist von einem Antrieb 15 des Mutterkörpers 8, welcher vorliegend von einer Anzahl von Schlüsselflächen gebildet ist, wie sich insbesondere aus der Darstellung gemäß Fig. 2 ergibt.

Der Mutterkörper 8 weist eine in der Fixierrichtung vordere axiale Stirnseite 16 (Stirnfläche) auf, die entgegen der Fixierrichtung F in Bezug auf eine von dem ersten Federteil 10 gebildete Abstützfläche 17 axial rückversetzt, also zu dieser beabstandet ist, sodass ein in der Fixierrichtung F vorderes Ende der Befestigungsmutter 3 von der Abstützfläche 17 des ersten Federteils gebildet ist.

Eine Schlüsselweite S der Schlüsselflächenpaare ist in Fig. 2 eingezeichnet.

Wie aus Fig. 2 ersichtlich ist, ist der axiale Abstand zwischen der Stirnseite 16 des Mutterkörpers 8 und der Abstützfläche 17 größer als der maximale Federweg s, sodass im verschraubten bzw. am Stehbolzen (Außengewindebolzen) festgelegten Zustand ein Kontakt zwischen Stirnfläche 16 und Abstützfläche 17 vermieden wird - alternativ ist es bei entsprechend in der Fixierrichtung F verlängertem Mutterkörper 8 denkbar, dass sich die Befestigungsmutter sowohl mit der Stirnfläche 16, als auch mit der Abstützfläche 17 auf demselben Teil, vorliegend beispielsweise auf dem Gleitblech 6 oder alternativ bei einer Ausführungsform ohne Gleitblech 6 unmittelbar auf dem Abgaskrümmer 2 abstützen - bevorzugt ist jedoch die gezeigte Variante mit verbleibenden Axialabstand.

Beim Verschrauben der Befestigungsmutter 3 mit dem vorerwähnten Außengewindebolzen durch Verdrehen der Befestigungsmutter 3 in einer Umfangsrichtung wird die Befestigungsmutter 3 in Richtung Abgaskrümmer in der Fixierrichtung F verstellt, wobei das erste Federteil 10 zur Anlage gelangt auf den Verbrennungsmotor und dadurch bei einem Weiterverdrehen der Befestigungsmutter und einer hierdurch bedingten Weiterverstellung der Befestigungsmutter in der Fixierrichtung F die Federteile 10, 11 vorgespannt werden und somit die Elastizität des verklemmten Verbundes erhöhen und eine Reserve gegen Setzen aufbauen.

### Bezugszeichenliste

- 1: Verbrennungsmotor
- 2: Abgaskrümmer
- 3: Befestigungsmutter
- 4: Zylinderkopf
- 5: Durchgangsöffnung
- 6: Gleitblech
- 7: Innengewinde
- 8: Mutterkörper
- 9: Innengewindeöffnung
- 10: erstes Federteil
- 11: zweites Federteil
- 12: hinteres Widerlager (hinterer Widerlagerabschnitt)
- 13: vorderes Widerlager (vorderer Widerlagerabschnitt)
- 14: Schaftabschnitt
- 15: Antrieb (Antriebsmittel)
- 16: Stirnseite
- 17: Abstützfläche

- F: axiale Fixierrichtung
- s: maximale Federweg
- S: Schlüsselflächenmaß

## Patentansprüche

1. Befestigungsanordnung umfassend zumindest eine Befestigungsmutter (3), einen Abgaskrümmer (2), welcher einen Außengewindebolzen umfasst, und einen Zylinderkopf (4) eines Verbrennungsmotors (1), wobei die Befestigungsmutter (3) zum Festlegen des Abgaskrümmers (2) an dem Zylinderkopf (4) durch Verschrauben in einer axialen Fixierrichtung (F) mit dem an dem Zylinderkopf (4) gehaltenen und eine Durchgangsöffnung (5) im Abgaskrümmer (2) durchsetzenden Außengewindebolzen ausgebildet ist, wobei die Befestigungsmutter (3) einen Innengewindeabschnitt zum Verschrauben mit dem Außengewindebolzen sowie Bremsmomentmittel zum Erhöhen des Lösemomentes umfasst, weiter umfassend eine Abstützfläche (17) zum mittelbaren oder unmittelbaren axialen Abstützen am Abgaskrümmer (2), wobei die Abstützfläche (17) an einem radial vorstehenden, in axialer Richtung elastisch vorspannbaren Federabschnitt ausgebildet ist, wobei die Befestigungsmutter (3) mehrteilig ausgebildet ist und einen sich axial von einem hinteren Ende bis einer in der Fixierrichtung (F) vorderen, axialen Stirnseite (16) erstreckenden Mutterkörper (8) mit einem die axiale Stirnseite (16) aufweisenden Schaftabschnitt (14) sowie mindestens ein von dem Mutterkörper (8) separates, über Sicherungsmittel unverlierbar an dem Mutterkörper (8) festgelegtes, insbesondere als Spannscheibe ausgebildetes, erstes Federteil (10) umfasst, und dass an dem Mutterkörper (8) der Innengewindeabschnitt ausgebildet ist und dass das erste Federteil (10) den Federabschnitt mit der Abstützfläche (17) ausbildet, die ein in der axialen Fixierrichtung (F) vorderstes axiales Ende der Befestigungsmutter (3) bildet, relativ zu dem die Stirnseite (16) des Schaftabschnittes (14) bezogen auf die axiale Fixierrichtung (F) rückversetzt und axial beabstandet ist
**dadurch gekennzeichnet,**
**dass** die Befestigungsmutter (3), über den zumindest einen Außengewindebolzen den Abgaskrümmer (2) am Zylinderkopf (4) mit einer vorgegebenen Schraubkraft oder Vorspannkraft unmittelbar oder mittelbar sichert, wobei das mindestens eine Federteil (10) der Befestigungsmutter (3) so ausgebildet, insbesondere so dimensioniert, ist, dass in einem gesicherten Zustand der Befestigungsanordnung eine federnde und/oder elastische mittelbare oder unmittelbare Anlage der Abstützfläche (17) des Federteils (10) an dem Abgaskrümmer (2) erreicht wird, wobei die Bremsmomentmittel der Befestigungsmutter (3) zum Erhöhen des Lösemomentes der Befestigungsanordnung dienen und, dass die Befestigungsmutter (3) im montierten Zustand mir ihrer Abstützfläche (17) nicht auf Block mit dem Abgaskrümmer (2) oder Gleitblech angezogen ist.

2. Befestigungsanordnung nach Anspruch 1,
**dadurch gekennzeichnet,**
**dass** zusätzlich zu dem ersten Federteil (10) und axial benachbart zu dem ersten Federteil (10) auf der von der Abstützfläche (17) abgewandten Axialseite (16) mindestens, bevorzugt ausschließlich, ein zweites, von dem Mutterkörper (8) separates, bevorzugt als Tellerfeder ausgebildetes, Federteil (11) an dem Mutterkörper (8) über die Sicherungsmittel unverlierbar festgelegt ist.

3. Befestigungsanordnung nach einem der Ansprüche 1 oder 2,
**dadurch gekennzeichnet,**
**dass** das mindestens eine, bevorzugt als geneigte und/oder gewölbte, bevorzugt umfangsgeschlossene, Tellerfeder ausgebildete, Federteil bezogen auf eine sich senkrecht zur Axialerstreckung des Mutterkörpers (8) erstreckenden Radialebene abgeschrägt oder gewölbt ist.

4. Befestigungsanordnung nach Anspruch 3,
**dadurch gekennzeichnet,**
**dass** das erste und das zweite Federteil (11) in dieselbe oder in einander entgegengesetzte Axialrichtungen geneigt und/oder gewölbt sind.

5. Befestigungsanordnung nach einem der vorhergehenden Ansprüche,
**dadurch gekennzeichnet,**
**dass** der Mutterkörper (8) und das mindestens eine Federteil (10, 11) als, insbesondere als Kaltfließpressteile, aus Metall ausgebildet sind.

6. Befestigungsanordnung nach einem der vorhergehenden Ansprüche,
**dadurch gekennzeichnet,**
**dass** die Sicherungsmittel einen, insbesondere durch Verstemmen ausgebildeten, axialen vorderen Widerlagerabschnitt (13), insbesondere einen Ringwulst, am Mutterkörper (8) umfassen.

7. Befestigungsanordnung nach einem der vorhergehenden Ansprüche,
**dadurch gekennzeichnet,**
**dass** sich das erste Federteil (10) oder das zweite Federteil (11) mit seiner von der Abstützfläche (17) abgewandten Seite (16) axial an einem monolithisch am Mutterkörper (8) ausgebildeten, insbesondere als Umfangsbund realisierten, hinteren Widerlagerabschnitt (12), abstützt, der bevorzugt eine maximale Vorspannung des mindestens einen Federteils (10, 11) begrenzend ausgebildet und angeordnet ist.

8. Befestigungsanordnung nach Anspruch 7,
**dadurch gekennzeichnet,**
**dass** eine dem hinteren axialen Widerlagerabschnitt (12) zugewandte axiale Stirnseite des ersten und/oder zweiten Federteils (10, 11) mit einer dieser zugewandten Seite des hinteren Widerlagerabschnitts (12) eines Winkel einschließt, der sich bei zunehmender elastischer Vorspannung der Feder verkleinert.

9. Befestigungsanordnung nach einem der vorhergehenden Ansprüche, **dadurch gekennzeichnet,**
**dass** der Innengewindeabschnitt zumindest abschnittsweise am Innenumfang des Schaftabschnitts (14) des Mutterkörpers (8) ausgebildet ist.

10. Befestigungsanordnung nach einem der vorhergehenden Ansprüche, **dadurch gekennzeichnet,**
**dass** die Bremsmomentmittel eine Erhöhung der Reibung zwischen Mutter und Gewindebolzen aufgrund elastischer Verformung eines einen Innengewindeteilabschnitt tragenden Auslenkabschnitts bewirkend ausgebildet sind.

11. Verbrennungsmotor mit einem Zylinderkopf (4) an dem ein Abgaskrümmer (2) mit Hilfe mindestens einer Befestigungsanordnung (3) nach einem der vorhergehenden Ansprüche festgelegt ist, wobei die Befestigungsmutter (3) mit einem am Zylinderkopf (4) gehaltenen und eine Durchgangsöffnung (5) im Abgaskrümmer (2) durchsetzenden Außengewindebolzen mit ihrem Innengewindeabschnitt, insbesondere unter Wechselwirkung von Bremsmomentmittel mit dem Außengewindebolzen, aufgeschraubt ist und den Abgaskrümmer (2) in Richtung Zylinderkopf (4) mittels des mindestens einen Federteils (10, 11) kraftbeaufschlagt, welches elastisch von dem Abgaskrümmer (2) weg ausgelenkt ist und sich in axialer Richtung mit seiner Abstützfläche (17), bevorzugt mittelbar, insbesondere über ein Gleitblech (6), oder alternativ unmittelbar auf dem Abgaskrümmer (2) abstützt.

12. Verbrennungsmotor nach Anspruch 11,
**dadurch gekennzeichnet**,
die Stirnseite (16) des Schaftabschnitts (14) axial entgegen der Fixierrichtung (F) von dem Abgaskrümmer (2) und/oder einem fakultativen, auf dem Abgaskrümmer (2) angeordneten, Gleitblech (6) beabstandet und rückversetzt ist.

## Claims

1. A fastening assembly, comprising at least one fastening nut (3), an exhaust manifold (2), which comprises an external-thread bolt, and a cylinder head (4) of a combustion engine (1), the fastening nut (3) being configured for fixing the exhaust manifold (2) on the cylinder head (4) by being screwed in an axial fixation direction (F) with the external-thread bolt held on the cylinder head (4) and forming a passage opening (5) in the exhaust manifold (2), the fastening nut (3) comprising an internal-thread section for being screwed on the external-thread bolt and braking-torque means for increasing the loosening torque, the fastening assembly further comprising a support surface (17) for direct or indirect axial support at the exhaust manifold (2), the support surface (17) being formed on a radially protruding spring section which is elastically pre-tensioned in the axial direction, the fastening nut (3) being designed in several pieces and comprising a nut body (8), which extends from a rear end to an axial front face (16) in the front in relation to the fixation direction (F) and has a shaft section (14) having the axial front face (16), and at least a first spring part (10), which is separate from the nut body (8), is captively fixed to the nut body (8) via securing means, is in particular formed as a spring washer and is formed on the nut body (8) of the internal-thread section, and the first spring part (10) forming the spring section having the support surface (17), which forms an axial end of the fastening nut, which is the front-most end in relation to the axial fixation direction (F), the front face (16) of the shaft section (14) being recessed in relation to the front-most axial end and to the axial fixation direction (F) and being axially spaced apart,
**characterized in that**
the fastening nut (3) directly or indirectly secures the exhaust manifold (2) on the cylinder head (4) via the at least one external-thread bolt using a pre-specified screwing force or pre-tensioning force, the at least one spring part (10) of the fastening nut (3) being designed, in particular dimensioned, such that the support surface (17) of the spring part (10) resiliently and/or elastically abuts directly or indirectly against the exhaust manifold (2) in a secured condition, the braking-torque means of the fastening nut (3) serving to increase the loosening torque of the fastening assembly and **in that** the support surface (17) of the fastening nut (3) is not pulled to block thickness with the exhaust manifold (2) or sliding plate in the mounted state.

2. The fastening assembly according to claim 1,
**characterized in that**
in addition to the first spring part (10) and axially adjacent to the first spring part (10), at least, preferably only, one second spring part (11) separate from the nut body (8) and preferably designed as a spring collar is captively fixed to the nut body (8) via the securing means on the axial side (16) facing away from the support surface (17).

3. The fastening assembly according to claim 1 or 2,
**characterized in that**
the at least one spring part, preferably designed as an inclined and/or curved, preferably circumferentially closed, spring collar, is beveled or curved with respect to a radial plane extending perpendicular to the axial extensions of the nut body (8).

4. The fastening assembly according to claim 3,
**characterized in that**
the first and the second spring part (11) is inclined and/or curved in the same or in opposite axial directions.

5. The fastening assembly according to any one of the preceding claims, **characterized in that**
the nut body (8) and the at least one spring part (10, 11) is made of metal, in particular as cold extruded parts.

6. The fastening assembly according to any one of the preceding claims, **characterized in that**
the securing means comprise an axial front thrust-bearing section (13), in particular formed by caulking and in particular a toroidal expansion joint, on the nut body (8).

7. The fastening assembly according to any one of the preceding claims, **characterized in that**
the first spring part (10) or the second spring part (11) is axially supported on a rear thrust-bearing section (12) with its side (16) facing away from the support surface (17), the thrust-bearing section (12) being formed monolithically on the nut body (8), in particular realized as a circumferential collar, and being formed and disposed preferably a maximum pre-tension of the at least one spring part (10, 11) in a limiting manner.

8. The fastening assembly according to claim 7,
**characterized in that**
an axial front face of the first and/or second spring part (10, 11) facing the rear axial thrust-bearing section (12) encloses an angle, which becomes reduced in size as the elastic pre-tension of the spring becomes increases, in conjunction with a side of the rear thrust-bearing section (12) facing the axial front face.

9. The fastening assembly according to any one of the preceding claims, **characterized in that**
at least sections of the internal-thread section are formed on the inner circumference of the shaft section (14) of the nut body (8).

10. The fastening assembly according to any one of the preceding claims, **characterized in that**
the braking-torque means are formed to increase the friction between the nut and thread bolt owing to elastic deformation of a deflecting section carrying an internal-thread section.

11. A combustion engine having a cylinder head (4), on which an exhaust manifold (2) is fastened with the aid of at least one fastening assembly (3) according to any one of the preceding claims, the fastening nut (3) being screwed on by its internal-thread section using an external-thread bolt, which is held on the cylinder head (4) and forms a passage opening (5) in the exhaust manifold (2), in particular with the braking-torque means in interaction with the external-thread bolt, and applying force on the exhaust manifold (2) in the direction of the cylinder head (4) by means of the at least one spring part (10, 11), which is elastically deflected away from the exhaust manifold (2) and is supported by its support surface (17) preferably directly, in particular via a sliding plate (6), or alternatively indirectly, on the exhaust manifold (2) in the axial direction.

12. The combustion engine according to claim 11,
**characterized in that**
the front face (16) of the shaft section (14) is axially spaced apart and recessed from the exhaust manifold (2) and/or a facultative sliding plate (6), which is disposed on the exhaust manifold (2), against the fixation direction (F).

## Revendications

1. Ensemble de fixation, comprenant au moins un écrou de fixation (3), un collecteur d'échappement (2), qui comprend un boulon de filetage extérieur, et une culasse (4) d'un moteur à combustion (1), l'écrou de fixation (3) étant configuré pour fixer le collecteur d'échappement (2) sur la culasse (4) en étant vissé dans une direction axiale de fixation (F) avec le boulon de filetage extérieur maintenu sur la culasse (4) et formant une ouverture de passage (5) dans le collecteur d'échappement (2), l'écrou de fixation (3) comprenant une partie de filetage intérieur pour être vissé sur le boulon de filetage extérieur et des moyens à couple de freinage pour augmenter le couple de desserrage, l'ensemble de fixation comprenant en outre une surface de support (17) pour un support axial direct ou indirect au collecteur d'échappement (2), la surface de support (17) étant formée sur une partie de ressort à saillie radiale qui est précontrainte élastiquement dans la direction axiale, l'écrou de fixation (3) étant conçu en plusieurs pièces et comprenant un corps d'écrou (8), qui s'étend axialement d'une extrémité arrière à une face frontale axiale (16) à l'avant par rapport à la direction de fixation (F) et a une partie d'arbre (14) ayant la face frontale axiale (16), et au moins une première partie de ressort (10), qui est séparée du corps d'écrou (8), est fixée de manière imperdable au corps d'écrou (8) par intermédiaire des moyens de sécurisation, et est notamment formée comme une rondelle élastique et que la partie de filetage intérieur est formée sur le corps d'écrou (8), et la première partie de ressort (10) forme la partie de ressort ayant la surface de support (17), qui forme une extrémité axiale de l'écrou de fixation, qui est l'extrémité la plus en avant par rapport à la direction axiale de fixation (F), la face frontale (16) de la partie d'arbre (14) étant en retrait et étant espacée axialement par rapport à l'extrémité axiale la plus en avant par rapport à la direction axiale de fixation (F),
**caractérisé en ce que**
l'écrou de fixation (3) fixe directement ou indirectement le collecteur d'échappement (2) sur la culasse (4) par l'intermédiaire d'au moins un boulon de filetage extérieur en utilisant une force de vissage ou de pré-tension pré-spécifiée, l'au moins une partie de ressort (10) de l'écrou de fixation (3) étant conçue, notamment dimensionnée, de telle sorte que la surface de support (17) de la partie de ressort (10) vienne en appui élastique et/ou résilient directe ou indirect contre le collecteur d'échappement (2) à l'état sécurisé, les moyens à couple de freinage de l'écrou de fixation (3) servant à augmenter le couple de desserrage de l'ensemble de fixation et **en ce que** l'écrou de fixation (3) n'est pas serrée à bloc avec la surface de support (17) avec le collecteur d'échappement (2) ou la plaque glissière à l'état monté.

2. Ensemble de fixation selon la revendication 1,
**caractérisé en ce que**
en plus de la première partie de ressort (10) et axialement adjacente à la première partie de ressort (10), au moins, de préférence seulement, une deuxième partie de ressort (11) séparée du corps d'écrou (8) et de préférence conçue comme ressort à disques est fixée de manière imperdable au corps d'écrou (8) par l'intermédiaire des moyens de sécurisation sur le côté axial (16) orienté à l'opposé de la surface de support (17).

3. Ensemble de fixation selon la revendication 1 ou la revendication 2, **caractérisé en ce que**
l'au moins une partie de ressort, de préférence conçue comme un ressort à disques incliné et/ou incurvé, de préférence fermé circonférentiellement, est biseautée ou courbée par rapport à un plan radial s'étendant perpendiculairement à l'extension axiale du corps d'écrou (8).

4. Ensemble de fixation selon la revendication 3,
**caractérisé en ce que**
la première et la deuxième partie de ressort (11) sont inclinées et/ou courbées dans la même direction axiale ou dans des directions axiales opposées.

5. Ensemble de fixation selon l'une quelconque des revendications précédentes,
**caractérisé en ce que**
le corps d'écrou (8) et l'au moins une partie de ressort (10, 11) sont en métal, notamment formés comme des pièces extrudées à froid.

6. Ensemble de fixation selon l'une quelconque des revendications précédentes,
**caractérisé en ce que**
les moyens de sécurisation comprennent une partie frontale axiale (13) à palier de butée, notamment formée par calfeutrage et notamment un anneau, sur le corps d'écrou (8).

7. Ensemble de fixation selon l'une quelconque des revendications précédentes,
**caractérisé en ce que**
la première partie de ressort (10) ou la deuxième partie de ressort (11) est supportée axialement sur une partie arrière (12) à palier de butée), notamment réalisée comme un collier circonférentiel, avec son côté (16) orienté à l'opposé de la surface de support (17), la partie (12) à palier de butée étant formée en une pièce sur le corps d'écrou (8 et étant formée et disposée de telle sorte qu'elle limite de préférence une pré-tension maximale de l'au moins une partie de ressort (10, 11).

8. Ensemble de fixation selon la revendication 7,
**caractérisé en ce**
**qu'**une face frontale axiale de la première et/ou de la deuxième partie de ressort (10, 11) orientée vers la partie axiale arrière (12) à palier de butée renferme un angle, dont la taille se réduit à mesure que la précontrainte élastique du ressort augmente, en liaison avec un côté de la partie arrière (12) à palier de butée tourné vers la face frontale axiale.

9. Ensemble de fixation selon l'une quelconque des revendications précédentes,
**caractérisé en ce**
**qu'**au moins des parties de la partie de filetage intérieur sont formées sur la circonférence intérieure de la partie d'arbre (14) du corps d'écrou (8).

10. Ensemble de fixation selon l'une quelconque des revendications précédentes,
**caractérisé en ce que**
les moyens à couple de freinage sont formés pour augmenter la friction entre l'écrou et le boulon fileté en raison de la déformation élastique d'une section de déflexion portant une partie de filetage intérieur.

11. Moteur à combustion ayant une culasse (4), sur laquelle est fixé un collecteur d'échappement (2) à l'aide d'au moins un ensemble de fixation (3) selon l'une quelconque des revendications précédentes, l'écrou de fixation (3) étant vissé par sa partie de filetage intérieur à l'aide d'un boulon de filetage extérieur, qui est maintenu sur la culasse (4) et forme une ouverture de passage (5) dans le collecteur d'échappement (2), notamment avec les moyens à couple de freinage en interaction avec le boulon de filetage extérieur, et appliquant une force sur le collecteur d'échappement (2) en direction de la culasse (4) au moyen d'au moins une partie de ressort (10, 11), qui est élastiquement déviée du collecteur d'échappement (2) et est supportée par sa surface de support (17) de préférence directement, notamment par l'intermédiaire d'une plaque glissière (6), ou indirectement, sur le collecteur d'échappement (2) dans la direction axiale.

12. Moteur à combustion selon la revendication 11,
**caractérisé en ce que**
la face frontale (16) de la partie d'arbre (14) est axialement espacée et en retrait du collecteur d'échappement (2) et/ou d'une plaque glissière facultative (6), qui est disposée sur le collecteur d'échappement (2), contre la direction de fixation (F).
